# EUROPÄISCHE PATENTSCHRIFT

(11) **EP 3 775 339 B1**
(45) Veröffentlichungstag und Bekanntmachung des Hinweises auf die Patenterteilung: **01.05.2024**
(21) Anmeldenummer: 19714644.2
(22) Anmeldetag: 29.03.2019
(51) Int. Cl.: D01F 9/32, F27B 9/08, F27B 9/36, F27B 9/28, F27B 9/34

(54) **OFEN**
FURNACE
FOUR

(30) Priorität: 09.04.2018 DE 102018108291
(43) Veröffentlichungstag der Anmeldung: 17.02.2021
(73) Patentinhaber: ONEJOON GmbH, 37120 Bovenden (DE)
(72) Erfinder: MUCK, Matthias, 37139 Adelebsen (DE)
(74) Vertreter: Ostertag & Partner Patentanwälte mbB
(86) Internationale Anmeldenummer: PCT/EP2019/057981
(87) Internationale Veröffentlichungsnummer: WO 2019/197176

(56) Entgegenhaltungen:
- EP-A2- 0 252 506
- DE-U1-202017 107 588
- JP-A- S5 643 423
- JP-A- H02 175 923
- JP-A- H04 163 321
- JP-A- 2004 205 068
- JP-A- 2008 082 611
- US-A- 4 900 247
- US-A1- 2003 189 965

## Beschreibung

Der Umfang der vorliegenden Erfindung wird durch den unabhängigen Anspruch 1 definiert und weitere Ausführungsformen der Erfindung werden in den abhängigen Ansprüchen 2-12 spezifiziert.

Derartige Öfen werden insbesondere bei der Herstellung von Kohlenstofffasern eingesetzt, welche in einem drei oder vierstufigen Verfahren aus Fasern aus Polyacrylnitril-Fasern gebildet werden. Polyacrylnitril wird nachfolgend meist als PAN abgekürzt. Auch Filze und Vliese und Kohlefaserpapier können in solchen Öfen behandelt werden. Andere Materialien als PAN sind beispielsweise Viskose und Lignin.

In einer ersten Herstellungsstufe wird Polyacrylnitril in einem Oxidationsofen bei Temperaturen zwischen etwa 200°C bis 400°C in Anwesenheit von Sauerstoff zu oxidierten PAN-Fasern oxidiert.

Diese oxidierten PAN-Fasern werden dann in einer zweiten Herstellungsstufe in einem Ofen bei etwa 400°C bis 1000°C einer thermischen Behandlung in einer sauerstofffreien Inertgas-Atmosphäre unterzogen, um den Anteil des Kohlenstoffs in den Fasern durch eine Carbonisierung zu steigern, der bei den oxidierten PAN-Fasern bei etwa 62 Gew.-% liegt. In der Regel werden Stickstoff N₂ als Inertgas verwendet.

Bei einer dritten Herstellungsstufe erfolgt die thermischen Behandlung in einem Ofen der eingangs genannten Art, der als Hochtemperaturofen bezeichnet wird, zwischen 800°C und 1800°C unter Stickstoffatmosphäre, wobei eine Carbonisierung erfolgt, bei welcher die PAN-Fasern pyrolysieren, bis sie einen Kohlenstoffanteil von etwa 92 Gew.-% bis 95 Gew.-% aufweisen.

Gegebenenfalls werden die nach der dritten Herstellungsstufe erhaltenen Kohlenstofffasern in einer vierten Herstellungsstufe in einem Ofen der eingangs genannten Art einer weiteren thermischen Behandlung in einer sauerstofffreien Inertgas-Atmosphäre bei Temperaturen zwischen 1800°C und 3000°C unterzogen; bei diesen Temperaturen erfolgt eine Graphitisierung der Kohlenstofffasern, die danach einen Kohlenstoffanteil von über 99 Gew.-% haben und als sogenannte GraphitFasern bezeichnet werden. In der Regel wird bei der Graphitisierung Argon Ar als Inertgas verwendet.

Der Prozessraum ist bei bekannten Hochtemperaturöfen durch eine Muffel aus Graphit begrenzt, die von einem Heizraum umgeben ist, in dem ein die Muffel umschließender Heizkäfig oder lediglich ein Heizelement oberhalb und unterhalb der Muffel untergebracht ist. Die Isolationsschicht, die den Prozessraum thermisch isoliert, umgibt dort den Heizraum und ist meist durch Graphithart- oder-weichfilze auch in Kombination mit keramischen Fasern realisiert, die entsprechend zwischen dem Ofengehäuse und dem Heizraum angeordnet sind. Derartige Isolationsmaterialien haben jedoch verhältnismäßig schlechte Isolationseigenschaften und zeigen vor allem in den oben erläuterten hohen Temperaturbereichen recht hohe Wärmeleitfähigkeiten. Daher kommt es zu Wärmeverlusten und einen dadurch bedingten Energiebedarf zum Aufrechterhalten der Ofentemperatur.

Es gibt auch Öfen der eingangs genannten Art, bei denen das Ofengehäuse wassergekühlt ist. In diesem Fall ist die Isolationsschicht, die den Prozessraum thermisch isoliert, durch eine Flüssigkeitsschicht gebildet. Dieses Isolationskonzept ist jedoch sowohl baulich als auch energetisch sehr aufwendig.

Öfen zur thermischen Behandlung von Material sind aus der US 4,900,247 A, der JP 2004 205 068 A, der JP 2008 082 611 A, der EP 0 252 506 A2, der JP H02 175 923 A. der JP S5 643 423 A2, der JP H04 163 321 A und der DE 20 2017 107 588 U1 bekannt.

Es ist Aufgabe der Erfindung, einen Ofen der eingangs genannten Art bereitzustellen, welcher energieeffizient betrieben werden kann.

Diese Aufgabe wird durch die technischen Merkmale des unabhängigen Anspruchs 1 gelöst, weitere Ausgestaltungen der vorliegenden Erfindung sind in den abhängigen Ansprüchen 2-12 angegeben.

Erfindungsgemäß wurde erkannt, dass ein Feststoff-Partikelmaterial eine hohe thermische Isolationswirkung haben kann, welche diejenige der bekannten Isolationskonzepte übertrifft, wobei insbesondere im Vergleich zu wassergekühlten Systemen der bauliche Aufwand gering ist. Bei dem Feststoff-Partikelmaterial handelt es sich vorzugsweise um rieselfähiges Schüttgut.

Wenn das Feststoff-Partikelmaterial der Isolationsschüttung erfindungsgemäß verdichtet ist, kann die Isolationswirkung gegenüber einer unverdichteten Schüttung des Feststoff-Partikelmaterials erhöht werden, wobei eine besonders gute Isolationswirkung dadurch erzielt wird, dass das Feststoff-Partikelmaterial ein Rußmaterial, insbesondere ein Rußmaterial mit einem Kohlenstoffanteil von mehr als 99,5%, ist..

Vorzugsweise ist das Feststoff-Partikelmaterial zu einem Pelletmaterial verarbeitet.

In der Praxis kann das Rußmaterial vorteilhaft ein Gasruß, ein Furnace-Ruß, ein Flammruß, ein Acetylenruß, ein Thermalruß, ein Channel-Ruß oder ein Gemisch aus mehreren dieser Rußarten sein.

Vorzugsweise befindet sich die Isolationsschüttung in einem Isolationsraum, welcher das Prozessraumgehäuse zumindest bereichsweise umgibtund als Ringraum ausgebildet ist, dessen äußere Begrenzung durch entsprechende Bereiche des Ofengehäuses gebildet ist.

Dabei ist es günstig, wenn der Isolationsraum zumindest bereichsweise an das Prozessraumgehäuse angrenzt. Dort, wo der Isolationsraum an das Prozessraumgehäuse angrenzt, gibt es keinen Zwischenraum zwischen der Isolationsschicht und dem Prozessraumgehäuse.

Zum Aufheizen der Prozessraumatmosphäre ist von Vorteil, wenn das Heizsystem wenigstens ein Heizelement umfasst, welches im Prozessraum angeordnet ist. Wenn nur dieses Heizkonzept umgesetzt ist, ist es beispielsweise möglich, dass der Isolationsraum das Prozessraumgehäuse in Umfangsrichtung vollständig umgibt und an das Prozessraumgehäuse angrenzt.

Alternativ oder ergänzend kann es vorteilhaft sein, wenn das Heizsystem wenigstens ein Heizelement umfasst, welches in einem Heizraum angeordnet ist, der an das Prozessraumgehäuse angrenzt. In diesem Fall kann die Isolationsschicht dort, wo der Heizraum an das Prozessraumgehäuse angrenzt, selbst nicht an das Prozessraumgehäuse angrenzen.

Vorzugsweise ist der Heizraum an der Oberseite oder an der Unterseite des Prozessraumgehäuses angeordnet. Es kommen jedoch auch alternative oder ergänzende Varianten in Frage, bei denen der Heizraum und folglich auch das darin untergebrachte Heizelement seitlich am Prozessraumgehäuse vorgesehen sind.

Es ist besonders effektiv, wenn das Heizelement ein erstes Heizelement und der Heizraum ein erster Heizraum ist, wobei das Heizsystem zumindest ein zweites Heizelement umfasst, welches in einem zweiten Heizraum angeordnet ist, welcher an den Prozessraum angrenzt.

Dabei sind vorzugsweise der erste Heizraum an der Oberseite und der zweite Heizraum an der Unterseite des Prozessraumgehäuses angeordnet.

Es ist günstig, wenn das Prozessraumgehäuse als Muffel, insbesondere als Muffel aus Graphit, ausgebildet ist.

Mit Blick auf einen oder mehrere vorhandene Heizräume ist es vorteilhaft, wenn das Prozessraumgehäuse den Prozessraum und den einen oder die mehreren Heizräume begrenzt.

Der Ofen kann als Batch-Ofen mit einem einzigen Zugang sein, über den zu behandelndes Material in den Prozessraum eingebracht und wieder aus dem Prozessraum entnommen werden kann. Es ist jedoch von Vorteil, wenn der Ofen ein Durchlaufofen ist und das zu behandelnde Material durch den Prozessraum hindurchführbar ist. Dies ist insbesondere günstig, wenn eingangs genannte Fasern behandelt werden sollen.

Nachstehend werden Ausführungsbeispiele der Erfindung anhand der Zeichnungen näher erläutert. In diesen zeigen:
- Figur 1: eine perspektivische Ansicht eines Ofens zur thermischen Behandlung von Kohlenstofffasern;
- Figur 2: einen Längsschnitt des Eingangsabschnitts eines ersten Ausführungsbeispiels des Ofens gemäß Figur 1;
- Figur 3: einen Querschnitt dieses ersten Ausführungsbeispiels des Ofens gemäß Figur 1 in der dort gezeigten Schnittebene III;
- Figur 4: einen entsprechenden Querschnitt eines zweiten Ausführungsbeispiels des Ofens;
- Figur 5: einen entsprechenden Querschnitt eines dritten Ausführungsbeispiels des Ofens.

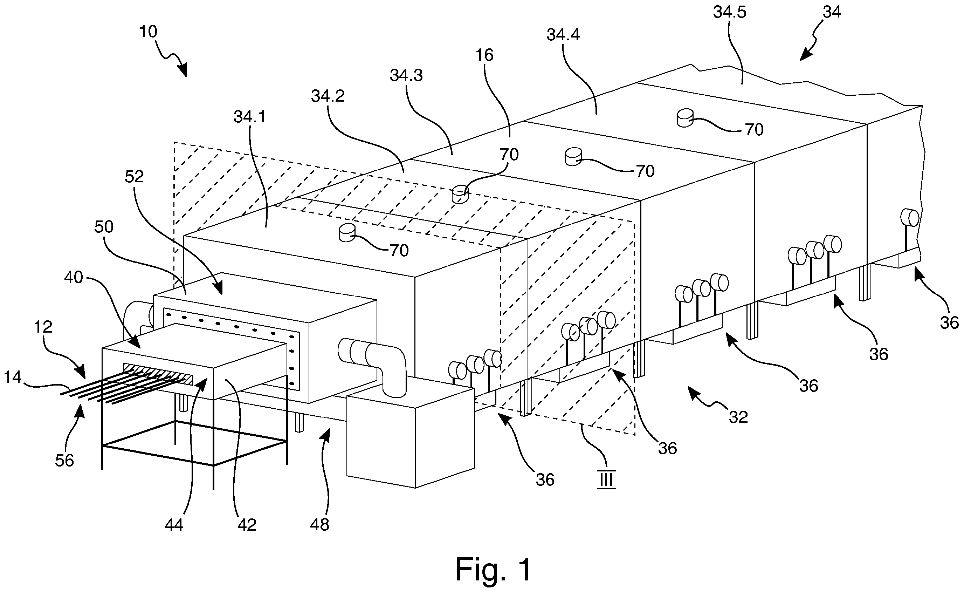

In den Figuren ist ein Ofen 10 zur thermischen Behandlung von Material gezeigt, bei dem es sich bei dem in den Figuren 1 bis 5 gezeigten Ausführungsbeispielen um Fasern 12 und beispielhaft um Fasern 14 aus oxidiertem Polyacrylnitril handelt, welche nachfolgend als oxPAN-Fasern 14 bezeichnet werden.

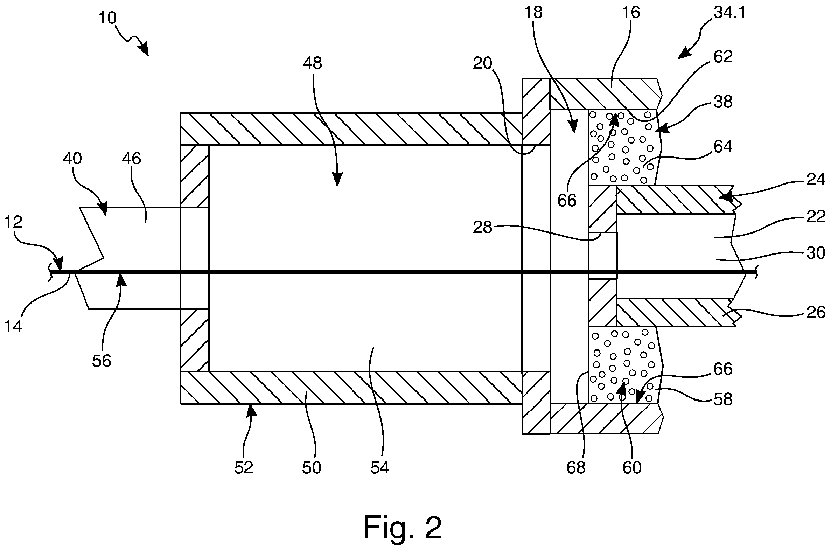

Der Ofen 10 umfasst ein Ofengehäuse 16, welches einen Innenraum 18 begrenzt. Das Ofengehäuse 16 ist bei den beschriebenen Ausführungsbeispielen aus Stahl. Das Ofengehäuse 16 hat an einer Stirnseite einen nur in Figur 2 zu erkennenden Faser-Eingangsdurchgang 20 und an einer gegenüberliegenden Stirnseite einen Faser-Ausgangsdurchgang, welche auf Grund der gezeigten Ansichten in den Figuren nicht zu erkennen ist. Abgesehen von diesen Durchgängen ist das Ofengehäuse 16 gasdicht.

In dem Innenraum 18 des Ofengehäuses 16 befindet sich ein Prozessraum 22, der seinerseits von einem Prozessraumgehäuse 24 in Form einer Muffel 26 begrenzt ist. Das Prozessraumgehäuse 24 hat einen rechteckigen Querschnitt, es sind jedoch auch andere, beispielsweise gekrümmte bzw. runde Querschnitte möglich. Beim vorliegenden Ausführungsbeispiel ist die Muffel 26 aus Graphit gebildet. Das Prozessraumgehäuse 24, d.h. die Muffel 26, hat an einer Stirnseite eine wieder nur in Figur 2 zu erkennende Faser-Einlassöffnung 28 und an einer gegenüberliegenden Stirnseite eine Faser-Auslassöffnung, welche ebenfalls in den Figuren nicht zu erkennen ist. Im Betrieb des Ofens 10 herrscht in dem Prozessraum 22 eine Prozessraumatmosphäre 30.

Der Ofen 10 umfasst ein Heizsystem 32, mit dem die Prozessraumatmosphäre 30 aufgeheizt wird. Dabei werden in dem Prozessraum 22 zwischen der Faser-Einlassöffnung 22 und der Faser-Auslassöffnung der Muffel 26 aufeinanderfolgende Heizzonen 34 ausbildet, von den denen in Figur 1 fünf Heizzonen 34.1, 34.2, 34.3, 34.4 und 34.5 zu erkennen sind. Die Temperatur steigt von Heizzone zu Heizzone derart, dass in dem Prozessraum 22 ein Temperaturgradient von etwa 800°C bis etwa 1800°C vorliegt. Jeder Heizzone 34 ist jeweils eine gesonderte Heizeinrichtung 36 zugeordnet, welche die Muffel 26 in der zugehörigen Heizzone 34 entsprechend aufheizt, wie es an und für sich bekannt ist. Der Ofen 10 umfasst eine Isolationsschicht 38, welche den Prozessraum 22 thermisch isoliert.

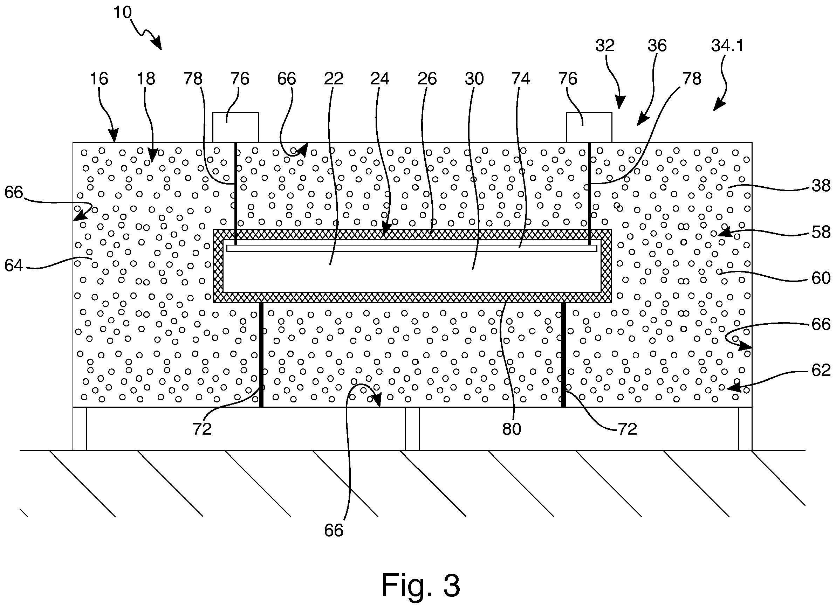

Auf die Heizeinrichtungen 36 und die Isolationsschicht 38 wird im Zusammenhang mit den Figuren 3 bis 5 nochmals näher eingegangen.

Eingangsseitig umfasst der Ofen 10 eine Eingangsschleuse 40 mit einem gesonderten Schleusengehäuse 42 und eine, wieder auf Grund der gezeigten Ansichten nicht zu erkennende Ausgangsschleuse mit ebenfalls einem gesonderten Schleusengehäuse. Über die nicht zu erkennende Ausgangsschleuse wird dem Innenraum 18 des Ofengehäuses 16, und dadurch auch dem Prozessraum 22, mit Hilfe einer Inertgaseinrichtung 44 ein Inertgas 46 zugeführt, so dass die thermische Behandlung der oxPAN-Fasern 14 unter Inertgas-Atmosphäre abläuft. Wie eingangs erwähnt, werden in der Praxis Stickstoff N₂ oder Argon Ar bei Temperaturen oberhalb von 1800°C als Inertgas verwendet. Die Prozessraumatmosphäre 30 ist ein Gemisch aus dem Inertgas und einem bei der Behandlung der oxPAN-Fasern 14 freigesetzten Pyrolysegas.

Der Ofen 10 umfasst außerdem ein insgesamt mit 48 bezeichnetes Abzugsystem, mittels welchem die Prozessraumatmosphäre 30 aus dem Prozessraum 22 absaugbar ist. Beim vorliegenden Ausführungsbeispiel ist zwischen der Eingangsschleuse 40 und dem Ofengehäuse 16 eine Durchgangs-Einhausung 50 einer Absaugeinrichtung 52 des Abzugsystems 48 zu erkennen, welche einen Strömungsraum 54 begrenzt. Dieser Strömungsraum 54 ist auf einer Seite gasdicht mit der Eingangsschleuse 40 und auf der anderen Seite gasdicht mit dem Ofengehäuse 16 verbunden, so dass das Inertgas 46 von der Eingangsschleuse 40 durch den Strömungsraum 54 in den Prozessraum 22 einströmen kann.

Die oxPAN-Fasern 14 werden mit Hilfe eines nicht eigens gezeigten, an und für sich bekannten Fördersystems als Faserteppich 56 durch die Eingangsschleuse 40, durch den Strömungsraum 54 und weiter durch den Faser-Eingangsdurchgang 20 des Ofengehäuses 16 in dessen Innenraum 18 und dort durch die Faser-Einlassöffnung 26 des Prozessraumgehäuses 24 in den Prozessraum 22 geführt. Der Faserteppich 56 durchläuft den Prozessraum 22 und die dort etablierten Heizzonen 34 und wird hiernach durch die Faser-Auslassöffnung des Prozessraumgehäuses 24 und durch den Faser-Ausgangsdurchgang des Ofengehäuses 16 und schließlich durch die damit verbundene Ausgangsschleuse aus dem Ofen 10 herausgeführt.

Der Ofen 10 ist folglich als Durchlaufofen konzipiert. Für andere Materialien als Fasern 12 kann der Ofen bei einer nicht eigens gezeigten Abwandlung auch als Batch-Ofen konstruiert sein. In diesem Fall wird das Material über die gezeigten Durchgänge sowohl in den Prozessraum 22 eingebracht als aus diesem entnommen, wenn die Behandlung abgeschlossen ist.

Die oben angesprochene Isolationsschicht 38 ist eine Isolationsschüttung 58 aus einem Feststoff-Partikelmaterial 60. In der Praxis handelt es sich bei dem Feststoff-Partikelmaterial 60 um rieselfähiges Schüttgut.

Die Isolationsschüttung 58 befindet sich in einem Isolationsraum 62, der das Prozessraumgehäuse 24 zumindest bereichsweise umgibt. Bei den gezeigten Ausführungsbeispielen grenzt der Isolationsraum 62 zumindest bereichsweise an das Prozessraumgehäuse 24 an.

Bei den gezeigten Ausführungsbeispielen ist der Isolationsraum 62 als Ringraum 64 ausgebildet, dessen äußere Begrenzung durch entsprechende Bereiche 66 des Ofengehäuses 16 gebildet ist. In Richtung der Eingangsschleuse 40 und der Ausgangsschleuse ist der Ringraum 64 durch jeweils eine Ringwand 68 geschlossen, von denen die entsprechende Ringwand 68 in Figur 2 zu erkennen ist.

Die Isolationsschüttung 58 wird zunächst bei gelöstem Gehäusedeckel, der nicht eigens gekennzeichnet ist, in den Isolationsraum 62 eingebracht und mit Stampfern verdichtet. Es ist auch möglich, die Isolationsschüttung 58 mittels Vibration zu verdichten. Hierzu können Teile des Ofengehäuses 16 von außen zeitweise in Schwingung versetzt werden. Alternativ können auch Schwingungserzeuger in die Isolationsschüttung 58 eingebracht werden.

Im Laufe der Zeit verdichtet sich die Isolationsschüttung 58 durch die betriebsbedingten Temperaturwechsel beim Auf- und Abheizen. Zudem ist ein Schwund an Material durch Reaktionen mit der Atmosphäre möglich. Dieses geschieht vor allem bei höheren Temperaturen oberhalb von 1800°C.

Um eine derartige Verdichtung oder einen solchen Materialschwund ausgleichen zu können, umfasst das Ofengehäuse 16 verschließbare Zugangsöffnungen 70, beispielsweise in Form von Zugangsstutzen, die lediglich in Figur 1 veranschaulicht sind. Der Isolationsraum 62 kann durch Zwischenwände in Isolationsabschnitte unterteilt sein, die dann über eine jeweilige Zugangsöffnung 70 erreicht werden können. Beispielsweise kann jeder Heizzone 34 ein solcher Isolationsabschnitt zugeordnet sein.

Auch so ergänztes Feststoff-Partikelmaterial 60 kann durch Stampfer und/oder mittels Vibration verdichtet werden, wie es oben beschrieben ist.

Das Feststoff-Partikelmaterial 60 kann ein granulares Material, insbesondere in Form eines körnigen Materials, eines Pulvermaterials oder eines Pudermaterials sein. Alternativ kann das Feststoff-Partikelmaterial auch zu einem Pelletmaterial verarbeitet sein. Eine besonders gut thermische Isolationswirkung, d.h. eine schlechte Wärmeleitfähigkeit, besteht bei Rußmaterial, insbesondere bei Rußmaterial mit einem Kohlenstoffanteil von mehr als 99,5%, das vorzugsweise ein Gasruß, ein Furnace-Ruß, ein Flammruß, ein Spaltruß, ein Acetylenruß, ein Thermalruß, ein Channel-Ruß oder ein Gemisch aus mehreren dieser Rußarten ist.

Bei allen in den Figuren 2 bis 5 gezeigten Ausführungsbeispielen ist das Prozessraumgehäuse 24, d.h. die Muffel 26, auf Stützen 72 gelagert, die sich nach unten durch den Isolationsraum 62 hindurch erstrecken und am Boden des Ofengehäuses 16 verankert sind. Gegebenenfalls reicht eine ein- und auslaufseitige Befestigung des Prozessraumgehäuses 24 an dem Ofengehäuse 16 aus; in diesem Fall kann auf die Stützen 72 verzichtet werden.

Die Figuren 2 und 3 zeigen nun ein erstes Ausführungsbeispiel des Ofens 10, bei dem der Isolationsraum 62 das Prozessraumgehäuse 24 in Umfangsrichtung vollständig umgibt und in Umfangsrichtung vollständig an das Prozessraumgehäuse 24 angrenzt. Dies ist in Figur 3 zu erkennen. In diesem Fall wird der Isolationsraum 62 für die Isolationsschüttung 58 somit in Umfangsrichtung durch die erwähnten Bereiche 66 das Ofengehäuses 16 einerseits und durch das Prozessraumgehäuse 24, d.h. die Muffel 26, andererseits begrenzt.

Die Heizeinrichtung 36 umfasst für jede Heizzone 34 ein Heizelement 74, das in dem Prozessraum 22 angeordnet ist. Das Heizelement 74 ist beim vorliegenden Ausführungsbeispiel plattenförmig. Als Material für das Heizelement 74 kommen beispielsweise Graphit oder Verbundwerkstoffe in Form von kohlenstofffaserverstärktem Kohlenstoff CFC ("carbon fiber carbon composite") in Betracht. Die Heizelemente 74 werden in an und für sich bekannter Art und Weise über außen am Ofengehäuse 16 vorhandene und nicht eigens gezeigte Heizmodule betrieben, die über Anschlussköpfe 76 und elektrische Anschlussbolzen 78 mit den Heizelementen 74 verbunden sind, wobei sich die Anschlussbolzen 78 sich durch das Prozessraumgehäuse 24, den Isolationsraum 62 und das Ofengehäuse 16 hindurch erstrecken.

Bei dem Ausführungsbeispiel nach den Figuren 2 und 3 ist das Prozessraumgehäuse 24 als Ein-Kammer-Gehäuse 80 ausgebildet, welches als solches einzig den Prozessraum 22 begrenzt.

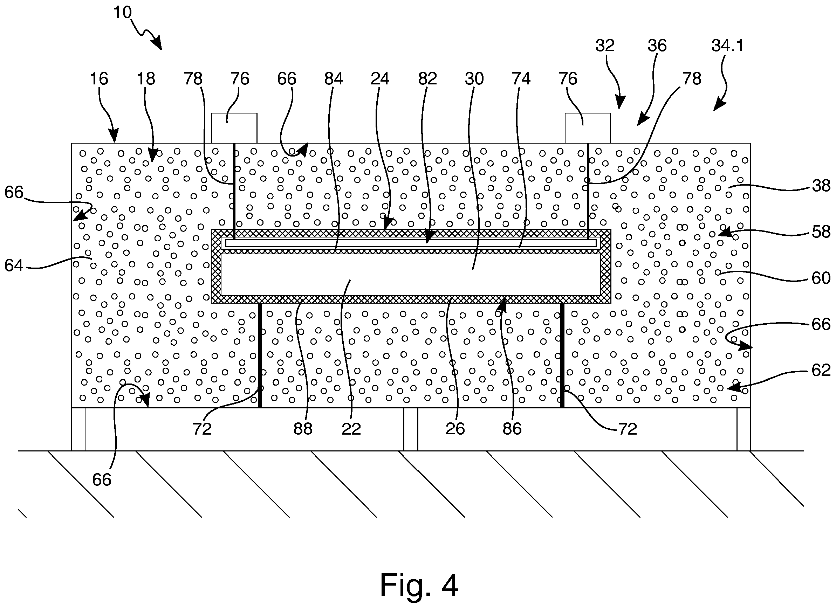

Bei dem in Figur 4 gezeigten zweiten Ausführungsbeispiel des Ofens 10 grenzt an den Prozessraum 22 ein Heizraum 82 an, in welchem das Heizelement 74 angeordnet ist. Der Heizraum 82 ist durch eine Trennwand 84 von dem Prozessraum 24 getrennt.

Hierfür ist das Prozessraumgehäuse 24, d.h. die Muffel 26, als Mehr-Kammer-Gehäuse 86, in diesem Fall als Zwei-Kammer-Gehäuse 88, ausgebildet, welches einerseits den Prozessraum 22 und andererseits den Heizraum 82 begrenzt.

Bei einer nicht eigens gezeigten Abwandlung kann der Heizraum 82 auch durch ein gesondertes Gehäuse begrenzt sein, das an dem Prozessraumgehäuse 24 angebracht ist.

Der Heizraum 82 ist an der Oberseite des Prozessraumes 22 angesiedelt. Bei einer nicht eigens gezeigten Abwandlung kann der Heizraum 82 mit dem Heizelement 74 auch an der Unterseite des Prozessraumes 22 angeordnet sein.

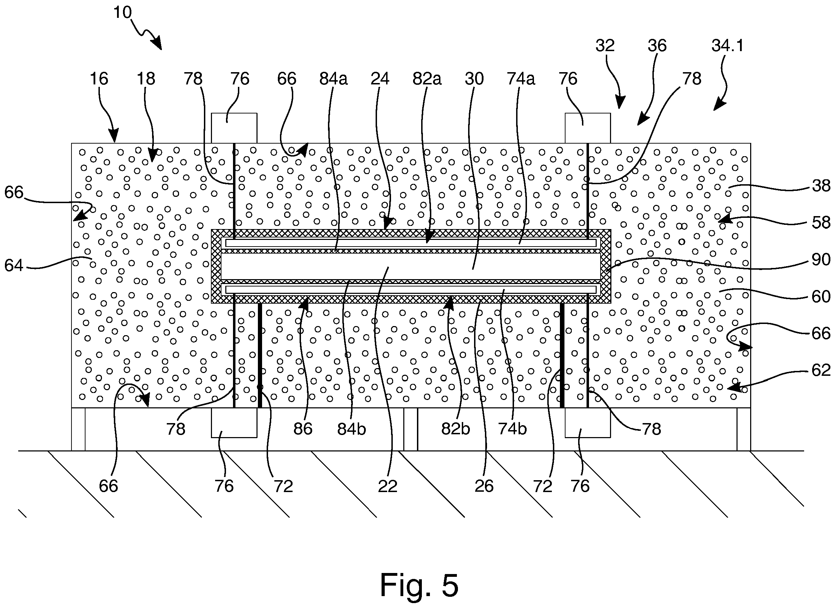

Bei dem in Figur 5 gezeigten dritten Ausführungsbeispiel des Ofens 10 ist der Heizraum an der Oberseite des Prozessraumes 22 ein erster Heizraum 82a und das darin untergebrachte Heizelement ein erstes Heizelement 74a. Die Trennwand ist eine erste Trennwand 84a. Außerdem grenzt an den Prozessraum 22 ein zweiter Heizraum 82b an, in welchem ein zweites Heizelement 74b angeordnet ist. Der zweite Heizraum 82b ist durch eine zweite Trennwand 84b von dem Prozessraum 24 getrennt.

Hierfür ist das Prozessraumgehäuse 24, d.h. die Muffel 26, wieder als Mehr-Kammer-Gehäuse 86, in diesem Fall als Drei-Kammer-Gehäuse 90, ausgebildet, welches einerseits den Prozessraum 22 und andererseits sowohl den ersten Heizraum 82a als auch den zweiten Heizraum 82b begrenzt.

Bei einer nicht eigens gezeigten Abwandlung kann entsprechend der erste Heizraum 82a und/oder der zweite Heizraum 82b durch jeweils ein gesondertes Gehäuse begrenzt sein, die an dem Prozessraumgehäuse 24 angebracht sind.

Der zweite Heizraum 82b ist an der Unterseite des Prozessraumes 22 angesiedelt.

Bei nicht eigens gezeigten Abwandlungen können auch alternativ oder ergänzend zu den Heizräumen 82 bzw. 82a und 82b ein oder mehrere Heizräume seitlich neben dem Prozessraum 22 vorgesehen sein, in dem oder in denen dann vertikal ausgerichtete Heizelemente angeordnet sind.

Bei den Ausführungsbeispielen mit dem Heizraum 82 oder mit den Heizräumen 82a, 82b ist es entsprechend nicht möglich, dass der Isolationsraum 62 oder die Isolationsschüttung 58 in Umfangsrichtung vollständig an den Prozessraum 22 angrenzt. Im Bereich der Heizräume 82, 82a und 82b sind diese jeweils zwischen dem Prozessraum 22 und dem Isolationsraum 62 und der Isolationsschüttung 58 angeordnet.

Bei einer ebenfalls nicht eigens gezeigten Abwandlung kann der Ofen 10 insgesamt oder zumindest der Prozessraum 22 in vertikaler Richtung von den Fasern 12 durchquert werden. In diesem Fall sind die Heizelemente 74, 74a und 74b und die gegebenenfalls zugehörigen Heizräume 82, 82a und 82bjeweils nicht mehr horizontal, sondern vertikal ausgerichtet.

Bei einer weiteren nicht eigens gezeigten Abwandlung kann das Ofengehäuse 16 seinerseits noch eine ergänzende thermische Isolierung umfassen.

## Patentansprüche

1. Ofen zur thermischen Behandlung, insbesondere zur Carbonisierung und/oder Graphitisierung, von Material, insbesondere von Fasern (12), insbesondere von Fasern (14) aus oxidiertem Polyacrylnitril PAN, mit
a) einem Ofengehäuse (16);
b) einem im Innenraum (18) des Ofengehäuses (16) befindlichen Prozessraum (22), der durch ein Prozessraumgehäuse (24) begrenzt ist und in welchen das zu behandelnde Material einbringbar ist;
c) einem Heizsystem (32), mittels welchem eine in dem Prozessraum (22) herrschende Prozessraumatmosphäre (30) aufheizbar ist;
d) einer den Prozessraum (22) thermisch isolierenden Isolationsschicht (38), wobei
e) die Isolationsschicht (38) eine Isolationsschüttung (58) aus einem Feststoff-Partikelmaterial (60) ist;
wobei
f) das Feststoff-Partikelmaterial (60) der Isolationsschüttung (58) verdichtet ist,
**dadurch gekennzeichnet, dass**
g) das Feststoff-Partikelmaterial (60) ein Rußmaterial, insbesondere ein Rußmaterial mit einem Kohlenstoffanteil von mehr als 99,5%, ist.

2. Ofen nach Anspruch 1, wobei das Feststoff-Partikelmaterial (60) zu einem Pelletmaterial verarbeitet ist.

3. Ofen nach Anspruch 1 oder 2, wobei das Rußmaterial ein Gasruß, ein Furnace-Ruß, ein Flammruß, ein Acetylenruß, ein Thermalruß, ein Channel-Ruß oder ein Gemisch aus mehreren dieser Rußarten ist.

4. Ofen nach einem der Ansprüche 1 bis 3, wobei sich die Isolationsschüttung (58) in einem Isolationsraum (62) befindet, welcher das Prozessraumgehäuse (24) zumindest bereichsweise umgibt und als Ringraum (64) ausgebildet ist, dessen äußere Begrenzung durch entsprechende Bereiche (66) des Ofengehäuses (16) gebildet ist.

5. Ofen nach einem der Ansprüche 1 bis 4, wobei das Heizsystem (32) wenigstens ein Heizelement (74) umfasst, welches im Prozessraum (22) angeordnet ist.

6. Ofen nach einem der Ansprüche 1 bis 5, wobei das Heizsystem (32) wenigstens ein Heizelement (74; 74a, 74b) umfasst, welches in einem Heizraum (82; 82a, 82b) angeordnet ist, der an den Prozessraum (22) angrenzt.

7. Ofen nach Anspruch 6, wobei der Heizraum (82; 82a, 82b) an der Oberseite oder an der Unterseite des Prozessraumes angeordnet ist.

8. Ofen nach Anspruch 6 oder 7, wobei das Heizelement ein erstes Heizelement (74a) und der Heizraum ein erster Heizraum (82a) ist, wobei das Heizsystem (32) zumindest ein zweites Heizelement (74b) umfasst, welches in einem zweiten Heizraum (82b) angeordnet ist, welcher an den Prozessraum (22) angrenzt.

9. Ofen nach Anspruch 8, wobei der erste Heizraum (82a) an der Oberseite und der zweite Heizraum (82b) an der Unterseite des Prozessraumes (22) angeordnet ist.

10. Ofen nach einem der Ansprüche 1 bis 9, wobei das Prozessraumgehäuse (24) als Muffel (26), insbesondere als Muffel (26) aus Graphit, ausgebildet ist.

11. Ofen nach einem der Ansprüche 6 bis 10, wobei das Prozessraumgehäuse (24) den Prozessraum (22) und den einen oder die mehreren Heizräume (82; 82a, 82b) begrenzt.

12. Ofen nach einem der Ansprüche 1 bis 11, wobei der Ofen (10) eine Durchlaufofen ist und das zu behandelnde Material durch den Prozessraum (22) hindurchführbar ist.

## Claims

1. A furnace for the thermal treatment, in particular the carbonization and/or graphitization, of material, in particular of fibers (12), in particular of fibers (14) composed of oxidized polyacrylonitrile PAN, comprising
a) a furnace housing (16);
b) a process space (22) which is located in the interior space (18) of the furnace housing (16) and is delimited by a process space housing (24) and into which the material to be treated can be introduced;
c) a heating system (32) by means of which a process space atmosphere (30) present in the process space (22) can be heated;
d) an insulation layer (38) which thermally insulates the process space (22),
wherein
e) the insulation layer (38) is an insulating bed (58) composed of a solid particulate material (60);
wherein
f) the solid particulate material (60) of the insulating bed (58) has been densified; **characterized in that**
g) the solid particulate material (60) is a carbon black material, in particular a carbon black material having a carbon content of more than 99.5%.

2. The furnace as claimed in claim 1, wherein the solid particulate material (60) has been processed to give a pellet material.

3. The furnace as claimed in claim 1 or 2, wherein the carbon black material is a gas black, a furnace black, a flame black, an acetylene black, a thermal black, a channel black or a mixture of a plurality of these types of carbon black.

4. The furnace as claimed in any of claims 1 to 3, wherein the insulating bed (58) is present in an insulation space (62) which surrounds the process space housing (24) at least in regions and is configured as an annular space (64) whose outer boundary is formed by corresponding regions (66) of the furnace housing (16).

5. The furnace as claimed in any of claims 1 to 4, wherein the heating system (32) comprises at least one heating element (74) which is arranged in the process space (22).

6. The furnace as claimed in any of claims 1 to 5, wherein the heating system (32) comprises at least one heating element (74; 74a, 74b) which is arranged in a heating space (82; 82a, 82b) which adjoins the process space (22).

7. The furnace as claimed in claim 6, wherein the heating space (82; 82a, 82b) is arranged on the upper side or on the underside of the process space.

8. The furnace as claimed in claim 6 or 7, wherein the heating element is a first heating element (74a) and the heating space is a first heating space (82a), where the heating system (32) comprises at least one second heating element (74b) which is arranged in a second heating space (82b) which adjoins the process space (22).

9. The furnace as claimed in claim 8, wherein the first heating space (82a) is arranged on the upper side and the second heating space (82b) is arranged on the underside of the process space (22).

10. The furnace as claimed in any of claims 1 to 9, wherein the process space housing (24) is configured as a muffle (26), in particular as a muffle (26) composed of graphite.

11. The furnace as claimed in any of claims 6 to 10, wherein the process space housing (24) delimits the process space (22) and the one or more heating spaces (82; 82a, 82b).

12. The furnace as claimed in any of claims 1 to 11, wherein the furnace (10) is a continuous furnace and the material to be treated can be passed through the process space (22).

## Revendications

1. Four pour le traitement thermique, notamment pour la carbonisation et/ou graphitisation, de matériau, notamment de fibres (12), notamment de fibres (14) en polyacrylonitrile PAN oxydé, avec
a) un logement de four (16) ;
b) un espace de processus (22) se trouvant dans l'espace interne (18) du logement de four (16) qui est délimité par un logement d'espace de processus (24) et dans lequel le matériau à traiter peut être introduit ;
c) un système de chauffage (32) au moyen duquel une atmosphère d'espace de processus (30) régnant dans l'espace de processus (22) peut être chauffée ;
d) une couche d'isolation (38) isolant thermiquement l'espace de processus (22),
dans lequel
e) la couche d'isolation (38) est un remblai d'isolation (58) en un matériau particulaire solide (60) ;
dans lequel
f) le matériau particulaire solide (60) du remblai d'isolation (58) est compacté,
**caractérisé en ce que**
g) le matériau particulaire solide (60) est un matériau de noir de carbone, notamment un matériau de noir de carbone avec une proportion de carbone de plus de 99,5 %.

2. Four selon la revendication 1, dans lequel le matériau particulaire solide (60) est transformé en un matériau de granule.

3. Four selon la revendication 1 ou 2, dans lequel le matériau de noir de carbone est un noir de carbone gazeux, un noir de carbone de fourneau, un noir de carbone de fumée, un noir de carbone d'acétylène, un noir de carbone thermique, un noir de carbone de tunnel ou un mélange de plusieurs de ces types de noir de carbone.

4. Four selon une des revendications 1 à 3, dans lequel le remblai d'isolation (58) se trouve dans un espace d'isolation (62) qui entoure au moins par régions le logement d'espace de processus (24) et est réalisé en tant qu'espace annulaire (64) dont la délimitation extérieure est formée par des régions correspondantes (66) du logement de four (16).

5. Four selon une des revendications 1 à 4, dans lequel le système de chauffage (32) comprend au moins un élément chauffant (74) qui est disposé dans l'espace de processus (22).

6. Four selon une des revendications 1 à 5, dans lequel le système de chauffage (32) comprend au moins un élément chauffant (74 ; 74a, 74b) qui est disposé dans un espace de chauffage (82 ; 82a, 82b) qui jouxte l'espace de processus (22).

7. Four selon la revendication 6, dans lequel l'espace de chauffage (82 ; 82a, 82b) est disposé sur le côté supérieur ou sur le côté inférieur de l'espace de processus.

8. Four selon la revendication 6 ou 7, dans lequel l'élément chauffant est un premier élément chauffant (74a) et l'espace de chauffage est un premier espace de chauffage (82a), dans lequel le système de chauffage (32) comprend au moins un second élément chauffant (74b) qui est disposé dans un second espace de chauffage (82b) qui jouxte l'espace de processus (22).

9. Four selon la revendication 8, dans lequel le premier espace de chauffage (82a) est disposé sur le côté supérieur et le second espace de chauffage (82b) sur le côté inférieur de l'espace de processus (22).

10. Four selon une des revendications 1 à 9, dans lequel le logement d'espace de processus (24) est réalisé en tant que moufle (26), notamment en tant que moufle (26) en graphite.

11. Four selon une des revendications 6 à 10, dans lequel le logement d'espace de processus (24) délimite l'espace de processus (22) et le ou les espaces de chauffage (82 ; 82a, 82b).

12. Four selon une des revendications 1 à 11, dans lequel le four (10) est un four continu et le matériau à traiter peut être passé à travers l'espace de processus (22).
